# EUROPÄISCHE PATENTSCHRIFT

(11) **EP 1 784 610 B1**
(45) Veröffentlichungstag und Bekanntmachung des Hinweises auf die Patenterteilung: **02.06.2010**
(21) Anmeldenummer: 05790680.2
(22) Anmeldetag: 12.08.2005
(51) Int. Cl.: F27D 3/10, F27D 13/00, F27D 15/02, C04B 2/10

(54) **VERFAHREN ZUR VERLÄNGERUNG DER VERWEILZEIT EINER GASSTRÖMUNG IN EINEM SCHÜTTGUT**
METHOD FOR EXTENDING THE RESIDENCE TIME OF A GAS FLOW IN BULK MATERIAL
PROCEDE POUR PROLONGER LE TEMPS DE SEJOUR D'UN FLUX GAZEUX DANS UNE MATIERE EN VRAC

(30) Priorität: 13.08.2004 DE 102004039551
(43) Veröffentlichungstag der Anmeldung: 16.05.2007
(73) Patentinhaber: Rheinkalk GmbH, 42489 Wülfrath (DE)
(72) Erfinder: KLINGBEIL, Lothar, 51109 Köln (DE)
(74) Vertreter: Cohausz & Florack
(86) Internationale Anmeldenummer: PCT/EP2005/008818
(87) Internationale Veröffentlichungsnummer: WO 2006/018252

(56) Entgegenhaltungen:
- EP-A- 1 439 360
- DE-U1- 9 406 035

## Beschreibung

Die Erfindung betrifft ein Verfahren zur Verlängerung der Verweilzeit einer Gasströmung in einem Schüttgut, insbesondere zur Verbesserung des Wärmeaustausches.

Tn den verschiedensten Industriezweigen, beispielsweise in der Kalk-, Zement- und Stahlindustrie, besteht die Aufgabe, Rohstoffe, welche als Kornschüttungen vorliegen, mittels Durchleitung eines Gasstromes in verschiedener Weise zu behandeln, beispielsweise zu erhitzen, zu brennen oder zu kühlen. Eine bekannte Applikation der Gasdurchleitung durch ein Schüttgut besteht in der Erhitzung von Kalkstein (CaCO₃) auf einem Wanderrost in einem Lepol-Vorwärmer vor Eintritt in einen üblicherweise als Drehrohrofen ausgebildeten Brennofen, in welchem der Kalkstein zu Brantkalk (CaO) gebrannt wird.
Problematisch im Hinblick auf die Prozesseffizienz ist hierbei, wie auch bei entsprechenden Brenn- oder Kühlapplikationen, dass der Gasstrom stets die kürzest mögliche Wegstrecke im Schüttgut nimmt, so dass die Wechselwirkungs- bzw. Verweilzeit zwischen dem Casstrom und dem Schüttgut ebenfalls minimal ist. Somit gibt ein Heißgasstrom an das zu erhitzende Schüttgut nur eine vergleichsweise geringe Wärmemenge ab, so dass die Vorwärmeinrichtung entsprechend groß ausgelegt sein muss, um die gewünschte Temperaturerhöhung im Schüttgut zu erreichen.
Entsprechendes gilt für Brenn- oder Kühlvorrichtungen.

Aus der EP 1. 439 360 A1 ist ein Verfahren zum Brennen eines mineralischen Materialgemisches mit unterschiedlicher Korngröße in einer gasdurchströmten Schüttgutsäule, beispielsweise in einem Schachtofen, bekannt. Um zu verhindern, dass verschiedene Kornfraktionen unterschiedlich stark von den Brenngasströmen durchströmt werden, was zu entsprechenden Qualitätsunterschieden in dem gebrannten Produkt führen würde, ist vorgesehen, dass dic Richtung, mit der die Korngröße des Materialgemisches im Schacht quer zur vertikalen Schachtachse zunehmen, periodisch geändert wird.
Somit ergeben sich in der vertikalen Schüttgutsäule regelmäßige horizontale Schichten, bei denen die Korngröße über die Schachtbreite abwechselnd zu- und abnimmt. Hierdurch ergibt sich zwar eine Vergleichmäßigung der vertikalen Durchströmung des Schüttgutes, jedoch keine verlängerte Verweilzeit des Gasstromes im Schüttgut.

Der Erfindung liegt daher die Aufgabe zugrunde, ein Verfahren zur Verlängerung der Verweilzeit einer Gasströmung in einem Schüttgut zu entwickeln, welches mit nur geringem technischen Aufwand insbesondere in Vorwärm-, Brenn-, Trocknungs- oder Kühlanlagen eingesetzt werden kann, so dass mit diesem Verfahren betriebene Anlagen miL hoher Effizienz arbeiten und entsprechend kompakt ausgelegt sein können.

Die Aufgabe wird erfindungsgemäß mit einem Verfahren zur Verlängerung der Verweilzeit einer Gasströmung in einem Schüttgut, wobei das Schüttgut durch eine Anlage transportiert wird, wobei die Gasströmung im Schüttgut an dort vorgesehenen Leitflächen umgeleitet wird, wobei die Leitflächen mit dem Schüttgut mitbewegt werden,
wobei das Schüttgut unterschiedliche, zumindest teilweise räumlich voneinander getrennte Kornfraktionen umfaßt und die Leitflächen durch die Grenzflächen zwischen den Kornfraktionen gebildet werden und eine Kornfraktion nach erfolgtem Wärmeaustausch mit der Gasströmung von dem Schüttgut abgetrennt und wiederverwendet wird
oder wobei die Leitflächen jeweils durch einen Körper, welcher nicht Restandteil1 des Schüttgutes ist, gebildet werden und der Körper nach erfolgtem Wärmeaustausch mit der Gasströmung von dem Schüttgut abgetrennt und wiederverwendet wird.

Durch die erfindungsgemäß im Schüttgut vorgesehenen Leitflächen kann der Weg des Gasstroms durch das Schüttgut gezielt beeinflusst werden. Mittels einer entsprechend gewählten Dimensionierung und Anordnung der Leitflächen kann somit die Wechselwirkungszeite zwischen dem Gasstrom und dem Schüttgut erheblich verlängert und sogar vervielfacht werden, so dass im Gegensatz zum Stand der Technik die mit dem erfindungsgemäßen Verfahren betriebenen Anlagen, beispielsweise solche zum Erhitzen, Brennen oder Kühlen des Schüttgutes, sich durch eine besonders hohe Prozesseffizienz auszeichnen. Entsprechend nimmt das Schüttgut eine größere Wärmemenge von einem Heißgasstrom auf bzw. gibt eine größere Wärmemenge an einen Kühlluftstrom ab. Im Vergleich zu den aus dem Stand der Technik bekannten Anlagen, können die mit dem erfindungsgemäßen Verfahren betriebenen Anlagen folglich effizienter betrieben werden und kompakter ausgelegt sein, wodurch sich die Anlagenkosten erheblich senken lassen. Große Anlagen lassen sich mit entsprechend erhöhter Durchsatzleistung betreiben.

Die Leitflächen können im Schüttgut beispielsweise als schräge gradlinige oder gekrümmte Flächen, als Zickzackflächen o.ä. ausgebildet sein.

Nach einer ersten Alternative der Erfindung ist vorgesehen, dass das Schüttgut unterschiedliche, zumindest teilweise räumlich voneinander getrennte Kornfraktionen umfasst und die Leitflächen durch die Grenzflächen zwischen den Kornfraktionen gebildet werden. Die Kornfraktionen können von identische Materialzusammensetzung und lediglich unterschiedlicher Korngröße sein. Möglich ist jedoch ebenso, dass die verschiedenen Kornfraktionen unterschiedliche Materialzusammensetzungen oder verschiedene Qualitätsstufen eines Materials, wie z. B. Kalkstein, mit voneinander abweichenden chemischen und/oder physikalischen Eigenschaften aufweisen. Im Falle eines aus zwei oder mehr Kornfraktionen bestehenden Schüttgutes wird durch die getrennte Aufgabe der einzelnen Kornfraktionen ausgenutzt, das die zwischen den Kornfraktioncn gebildeten Grenzflächen jeweils ein Hindernis für den durch das Schüttgut geleiteten Gasstrom darstellen, durch welche seine Ausbreitungsrichtung im Schüttgut gezielt gesteuert werden kann.

Erfindungsgemäß ist dabei vorgesehen, dass eine Kornfraktion nach erfolgtem Wärmeaustausch mit der Gasströmung von dem Schüttgut abgetrennt und wiederverwendet wird. In diesem Fall wird somit vor dem Wärmeaustausch im Rahmen eines Vorwärm-, Brenn-, Trocknung- oder Kühlprozesses ein recyclefähiges Fremdmaterial zur Ausbildung der Leitflächen in einer Aufgabestation in das Schüttgut eingeleitet, nach diesem Prozess vollständig aus dem Schüttgut, welches seinerseits weiteren Bearbeitungsschritten unterzogen wird, wieder entfernt und zur Aufgabestation zurückgeführt. Durch diese Wiederverwendung können in beträchtlichem Maße Materialsowie Entsorgungskosten eingespart werden. Entscheidend ist hierbei, dass das Fremdmaterial während des Prozesses nicht verändert wird, folglich ausreichend temperaturbeständigsein muss, und somit problemlos wiederverwendet werden kann. Hierbei kommen sowohl natürliche, beispielsweise Basaltschüttungen, als auch nicht natürliche Materialien z.B. Keramikschüttungen, zum Einsatz. Da sich das Fremdmaterial von dem restlichen Schüttgut durch seine Korngröße unterscheidet, kann das Abtrennen zweckmäßigerweise durch ein Absieben erfolgen.

Nach einer zweiten Alternative der Erfindung ist vorgesehen, dass die Leitflächen jeweils durch einen Körper, welcher nicht Bestandteil des Schüttgutes ist, gebildet werden.
Hierbei kommt es folglich nicht auf die Ausbildung von Grenzflächen im Schüttgut durch getrennt aufgegebene Kornfraktionen an. Aus unterschiedlichen Kornfraktionen gebildete Schüttgüter können somit beliebig vermengt sein und somit sehr gleichmäßig mit dem Gasstrom beaufschlagt werden.
Vorzugsweise ist jeder eine Leitfläche bildende Körper plattenförmig ausgebildet. Dabei sollte es nicht zu einer Kontaktverbindung der Körper zum Schüttgut ("Anbacken") kommen. Die erfindungsgemäß vorgesehenen Leitflächen, welche nicht an dem in der Anlagen ablaufenden Prozess (z.B.
Vorwärmen, Brennen, Trocknung oder Kühlung) beteiligt sind, werden im Schüttgut mit bewegt und nach erfolgtem Wärmeaustausch mit der Gasströmung von dem Schüttgut abgetrennt, zurückgewonnen und wiederverwendet. Weiterhin können die Körper aus verschiedenen Materialion bestehen.
Entscheidend ist eine hohe Temperaturbeständigkeit.

Vorzugsweise bestehen die Körper daher zumindest teilweise aus Feuerfestmaterial.

Das erfindungsgemäße Verfahren kann in den verschiedensten Anlagen zum Einsatz kommen. Prinzipiell lässt sich das erfindungsgemäße Verfahren bei allen stationären und beweglichen perforierten Böden, die von einem Gas durchströmt werden, einsetzen, unabhängig von der Richtung des die Schüttungen durchströmenden Gases. Besonders zweckmäßig ist der Einsatz in einer Anlage, in der das Schüttgut auf einem Wanderrost transportiert wird. Dabei handelt es sich vorzugsweise um einen Lepolrost-Vorwärmer, in welchem, wie eingangs erwähnt, bei der Kalkproduktion das Brenngut vor Eintritt in den Ofen durch dessen Verbrennungsgase vorgewärmt wird.

Auf derartigen Wanderrosten können die Leitflächen, unabhängig davon, ob es sich um Grenzflächen der Kornfraktionen im Schüttgut, d.h. um autogene Leitflächen, oder um Körper, welche nicht Bestandteil des Schüttgutes sind, handelt, in unterschiedlicher Weise angeordnet sein.
Entsprechend der jeweils gewählten Anordnung wird der Gasstrom auf eine gegenüber der freien, ungehinderten Durchströmung mehr oder weniger stark abweichende Strecke gezwungen. Gemäß einer besonders vorteilhaften Ausgestaltung der Erfindung sind die Leitflächen im Schüttgut parallel zueinander, insbesondere jalousieartig, angeordnet.

Eine weitere besonders vorteilhafte Ausgestaltung der Erfindung besteht darin, dass das Schüttgut durch einen Schachtvorwärmer oder durch einen Schachtofen, insbesondere einen Ringschachtofen, transportiert wird. Im Gegensatz zu einem Wanderrost bewegt sich das Schüttgut durch einen solchen Vorwärmer oder Ofen im wesentlichen in vertikaler Richtung. Entsprechend kann die Anordnung der Leitflächen optimiert werden. Beispielsweise können die Leitflächen in dem Schacht- bzw. Ringschachtofen in einzelnen Axialebenen radial nach Art eines Propellers angeordnet sein, wobei die Leitflächen jeweils benachbarter Ebenen zueinander versetzt angeordnet sind. Durch diese Winkelversetzungen, wird dem im Schacht des Schacht- bzw. Ringschachtofens aufsteigenden oder fallenden Gasstrom eine Drallbewegung aufgezwungen. Die Leitflächen sind dabei geneigt zur Strömungsrichtung ausgerichtet. Eine besonders ausgeprägte Drallbewegung kann durch eine weitere vorteilhafte Konfiguration der Leitflächen erreicht werden. Hierbei sind die Leitflächen radial in einer Spirale nach Art einer Wendeltreppe angeordnet, wobei es sich versteht, dass die Spirale zumindest einen vollen Kreisumfang des zylindrischen Ringschachtofens abdeckt, um ein vertikales Auf- oder Abströmen des Gasstroms zu verhindern. In diesem Fall sind die Leitflächen im wesentlichen horizontal ausgerichtet. Zur Begrenzung des Dralls und damit des Druckverlustes im Ofen können auch mehrere parallel durch den Schachtofen verlaufende Spiralen vorgesehen sein, die selbst jeweils nur einen Teil des Kreisumfangs abdecken.

Die Leitflächen können auch im Falle des Schacht- bzw. Ringschachtofens durch eine spezielle Kornfraktion oder durch Körper, welche nicht Bestandteil des Schüttgutes sind, gebildet werden, wobei die Körper ortsfest im Ofen angeordnet sein oder auch mit dem Schüttgut mitbewegt werden können. In letzterem Falle ist nach einer besonders vorteilhaften Ausgestaltung der Erfindung vorgesehen, dass die mitbewegten Körper aus einem Kunststoff bestehen, welcher in der Brennzone des Schachtofens verbrennt. Besonders bevorzugt wird dabei ein Kunststoff, welcher praktisch rückstandsfrei verbrennt. Hierdurch kann das Herauslösen des Körpers aus dem gebrannten Schüttgut entfallen.

Im folgenden wird die Erfindung anhand einer lediglich Ausführungsbeispiele darstellenden Zeichnung näher erläutert. Es zeigen:
- Fig. 1a-c: eine schematische Darstellung der Gasströmung durch ein zwei Kornfraktionen umfassendes Schüttgut,
- Fig. 2a-f: eine schematische Darstellung der Aufgabe eines zwei Kornfraktionen umfassenden Schüttgutes auf einen Wanderrost,
- Fig. 3: einen Lepol-Vorwärmer in Seitenansicht,
- Fig. 4a-c: ein Längssegment eines Ringschachtofens mit spiralförmig angeordneten und mit in Axialebenen angeordneten Leitflächen im Axialschnitt und
- Fig. 5: eine schematische Darstellung der Gasströmung durch ein Schüttgut nach dem Stand.der Technik.

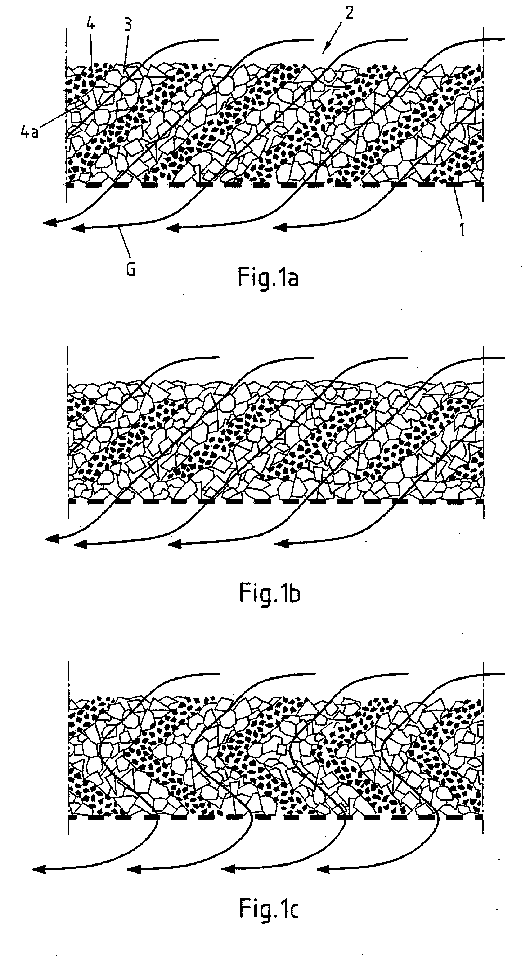

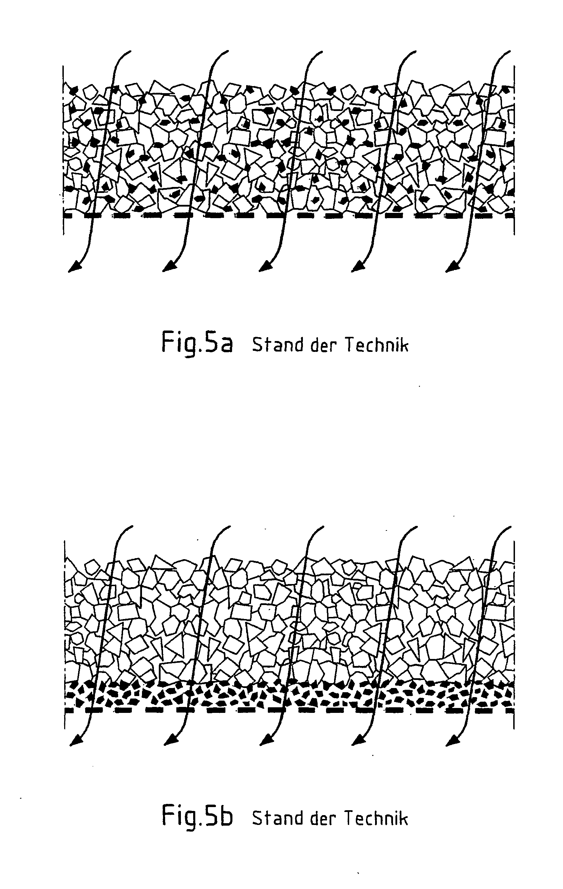

In den Fig. 1a bis c ist in schematisierter Ansicht der Verlauf einer Heißgasströmung durch ein zwei Kornfraktionen umfassendes Schüttgut 2 dargestellt. Die beiden Kornfraktionen 3, 4 des Schüttgutes 2 sind räumlich voneinander getrennt derart auf einen Wanderrost 1 aufgegeben, dass sich eine um ca. 45° zur Horizontalen geneigte streifige Verteilung (Fig. 1a,b) und entsprechend periodische Grenzflächen 4a zwischen den Kornfraktionen 3, 4 ausbilden. Die Grenzflächen 4a fungieren hierbei als Leitflächen für den das Schüttgut 2 von oben nach unten durchströmenden Gasstrom G. Mittels dieser Schüttgutleitflächen wird der überwiegende Teil des Heißgasstroms G von der sich normalerweise einstellenden annähernd vertikalen Strömungsrichtung (s. Stand der Technik in Fig. 5) auf eine der Neigung der Grenzflächen 4a entsprechende und deutlich verlängerte Strömungsbahn gezwungen, während lediglich ein kleiner Teilgasstrom (nicht dargestellt) entsprechend den jeweils herrschenden Druckverhältnissen und der Porösität der Grenzflächen durch diese hindurchdringt. Erfindungsgemäß wird dadurch die Verweilzeit der Heißgasströmung und damit die Wechselwirkungszeit zwischen dem zu erhitzenden Schüttgut verlängert, was zu einem signifikant verbesserten Wärmeaustausch und damit zu einer verbesserten Durchsatzleistung führt. Das durch die getrennte Aufgabe der Kornfraktionen 3, 4 in der groben Kornfraktion 3 vergrößerte Porenvolumen führt zudem eine Reduzierung des Druckverlustes im Heißgasstrom G und zu einer verbesserte Passage von Feinstäuben durch die Materialbettschüttung 2. Es versteht sich, dass der Gasstrom G auch in umgekehrter Richtung, d. h. aufsteigend strömen kann.

Gemäß Fig. 1c ist anstatt einer geradlinigen streifigen Verteilung der feinen Kornfraktion 3 eine Winkelform gewählt. Durch die Winkelform wird die durch den Heißgasstrom G durch das Schüttgut zurückzulegende Stecke weiter erhöht. Weitere Geometrien, wie z.B. Zickzack- oder Schlangenlinien, sind ebenso möglich.

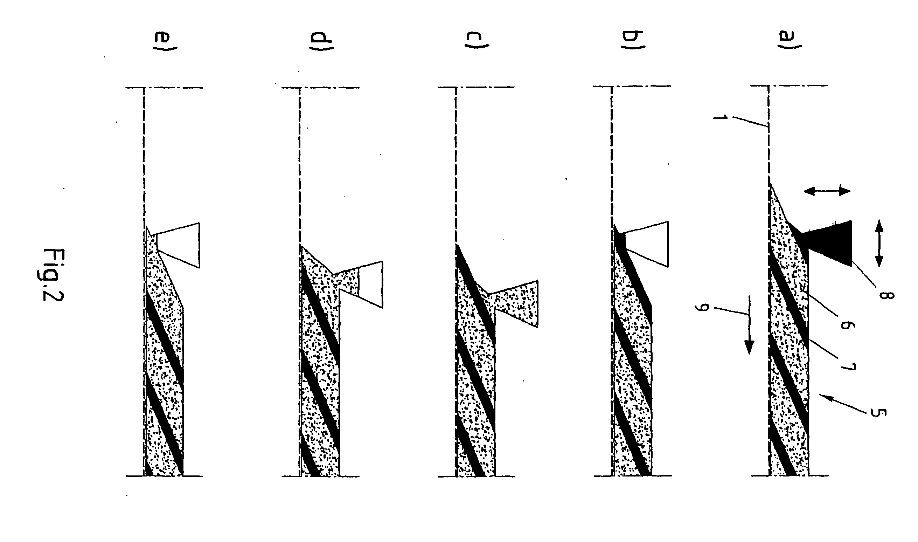

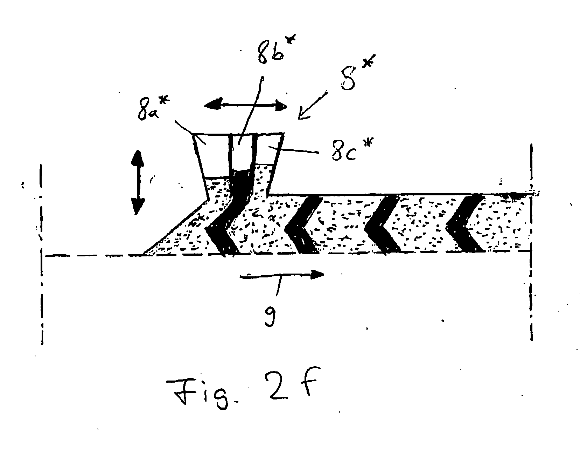

In Fig. 2 ist die getrennte Aufgabe zweier verschiedener Kornfraktionen 6, 7 eines Schüttgutes 5 auf einen Wanderrost 1 zur Ausbildung einer streifigen Verteilung gemäß Fig. 1a schematisch dargestellt. Das Schüttgut 5 wird dabei über einen Aufgabetrichter 8 auf den sich unterhalb der Öffnung des Aufgabetrichters 8 horizontal in Richtung des Pfeiles 9 bewegenden Wanderrost 1 geschüttet. Dabei ist der Aufgabetrichter 8 sowohl in horizontaler wie in vertikaler Richtung verfahrbar, wobei durch eine entsprechende Einstellung der horizontalen und vertikalen Verfahrgeschwindigkeit des Aufgabetrichters 8 die Neigung und Dicke der jeweiligen Streifen eingestellt werden kann. Ferner weist der Trichter zwecks Anpassung an die Korngröße der jeweils aufzugebenden Kornfraktion und an den gewünschten Massenfluss eine bezüglich Ihrer Querschnittsfläche verstellbare Schüttöffnung auf.

Zur Erzeugung eines aus der feinen Kornfraktion 7 gebildeten Streifens (Fig. 2a,b), dessen Grenzflächen zur groben Kornfraktion 6, wie oben beschrieben, die Leitflächen für den das Schüttgut 5 durchströmenden Gasstrom bilden, wird der Aufgabetrichter 8 während der kontinuierlichen Abgabe der feinen Kornfraktion 7 in Richtung des Pfeiles also vergleichsweise rasch nach links und gleichzeitig nach unten bewegt. In prinzipiell gleicher Weise wird sodann der breite Streifen grober Körnung 6 erzeugt (Fig. 2c bis e), wobei hier entsprechend eine wesentlich langsamere Verfahrgeschwindigkeit des Aufgabetrichters 8 in horizontaler Richtung gewählt wird. Eine umgekehrte Verfahrstrategie, bei der der Trichter nach rechts und gleichzeitig nach oben bewegt wird, ist ebenso möglich. Insbesondere bei dieser Verfahrstrategie kann eine Kornstreuung weitgehend vermieden werden.

Der in den Fig. 2a bis e dargestellte Schichtaufbau ist nur bis zu einem bestimmten von der jeweiligen Korngröße und -form und weiteren Parametern abhängigen Böschungswinkel präzise möglich. Oberhalb dieses Winkels, d. h. bei steiler angeordneten Schichtstreifen, kommt es zu einem Abböschen bzw. Abgleiten des Schichtmaterials. Sollen, wie beispielsweise in den Fig. 2a bis e gezeigt, schmale Streifen einer feinkörnigen Fraktion in eine grobkörnige Fraktion eingebracht werden, so kann oberhalb des Böschungswinkels und insbesondere bei kompliziert geformten Streifengeometrien eine hohe Präzision durch Verwendung eines mehrzelligen Schichtaufbautrichters erreicht werden. Ein solcher ist in Fig. 2f dargestellt. Der mehrzellige Schichtaufbautrichter 8* umfasst insgesamt drei Aufgabezellen 8a*, 8b* und 8c*, deren Schüttöffnungen sich jeweils ganz oder teilweise öffnen oder verschließen lassen. Die mittlere Aufgabezelle 8b* ist dabei für die feinkörnige Fraktion vorgesehen, während die umgebenden äußeren Zellen 8a* und 8c* mit der grobkörnigen Fraktion gefüllt sind. Durch eine simultane Aufgabe der feinkörnigen und der grobkörnigen Fraktion und eine entsprechende Regelung des Massenflusses durch die Schüttöffnungen der einzelnen Trichterzellen können somit auch steil stehende Streifen und damit Grenzflächen, deren Winkel zur Horizontalen größer als der Böschungswinkel ist, mit hoher Präzision erzeugt werden, da die feinkörnige Fraktion durch die simultan aufgegebene grobkörnige Fraktion beidseitig stabilisiert wird. Ebenso sind vertikal stehende Streifen möglich. Der mehrzellige Schichtaufbautrichter 8* ist dabei ebenso in horizontaler und vertikaler Richtung verfahrbar. Mit einer entsprechenden Verfahrstrategie können auch komplizierte Strukturen wie zickzack- oder Schlangenlinienförmige Streifen problemlos erzeugt werden. Rein exemplarisch ist in Fig. 2f die Erzeugung einer Zickzackstruktur, ähnlich wie in Fig. 1c, dargestellt.

Neben der gezeigten Trichterform mit drei nebeneinander angeordneten Zellen ist auch eine Trichter-in-Trichterform möglich (nicht dargestellt), d. h. die eine Kornfraktion ist in einen inneren Kegeltrichter gefüllt, welcher seinerseits in einem äußeren Kegeltrichter, der mit der zweiten Kornfraktion gefüllt ist, angeordnet ist. Dabei sind die Kegel normalerweise koaxial ausgerichtet. Je nach gewünschter Geometrie der durch die unterschiedlichen Kornfraktionen gebildeten Grenzflächen ist es aber auch möglich, dass die Achse des inneren Kegels winklig zu der des äußeren Kegels steht und somit eine Art "Taumelposition" relativ zum äußeren Kegel einnimmt. Mit dieser Trichter-in-Trichteranordnung lassen sich die unterschiedlichsten dreidimensionalen Grenzflächengeometrien erzeugen.

Umfasst das Schüttgut mehr als zwei Kornfraktionen, so werden diese nach dem oben beschriebenen Verfahren nacheinander aufgegeben, wobei sich ebenfalls Grenzflächen zwischen den einzelnen Kornfraktionen ausbilden, welche als Leitflächen zur Steuerung der Gasströmung durch das Schüttgut fungieren. Bei stark unterschiedlicher Korngröße der verschiedenen Kornfraktionen besteht die Gefahr eines Eindringens der Körner der feinkörnigen Fraktion in die porige Oberfläche der grobkörnigen Fraktion, was die Leitflächenwirkung der sich zwischen den beiden Kornfraktionen bildenden Grenzfläche beeinträchtigen würde. In diesem Fall kann es sinnvoll sein, in einem Zwischenaufgabeschritt an der Grenzfläche eine dünne Schicht einer weiteren Fraktion mittlerer Korngröße aufzubringen. Diese verschließt die porige Oberfläche der grobkörnigen Fraktion und minimiert somit das Eindringen der Körner der feinkörnigen Fraktion in diese.

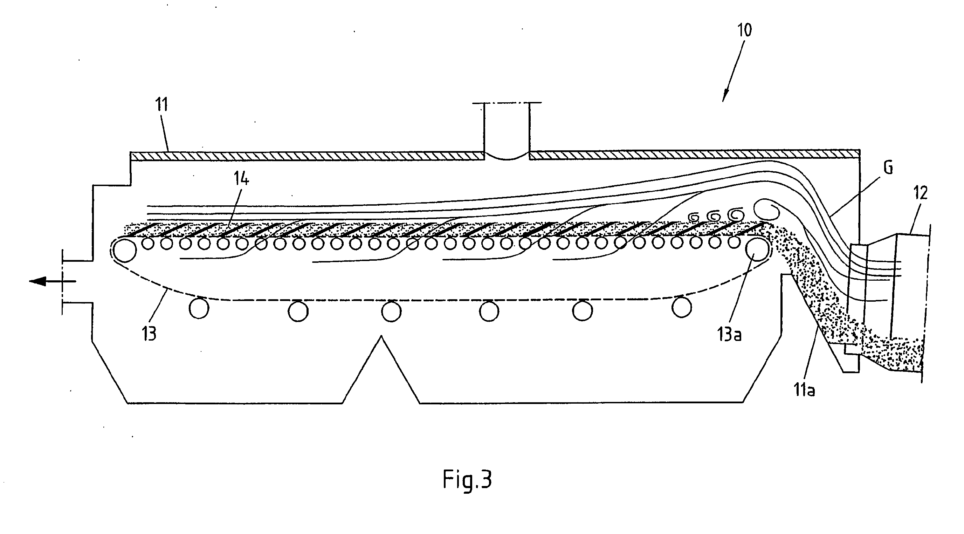

In Fig. 3 ist ein Lepol-Vorwärmer 10 in Seitenansicht dargestellt. Dieser wird insbesondere in der Kalkproduktion zur Erwärmung des Brenngutes (Kalkstein) vor Eintritt in den Ofen eingesetzt. Als Heißgase dienen dabei die aus dem vorliegend als Drehrohrofen 12 ausgebildeten Ofen ausströmenden Verbrennungsgase G. Der Lepol-Vorwärmer 10 umfasst ein langgestrecktes Gehäuse 11, in welchem ein als Endlosförderband ausgebildeter Wanderrost 13 angeordnet ist. Das wiederum aus zwei unterschiedlichen Kornfraktionen bestehende Schüttgut 14 wird in der oben beschriebenen Weise über einen Aufgabetrichter (nicht dargestellt) auf den Wanderrost 13 aufgegeben, wobei sich eine streifige Verteilung der räumlich voneinander getrennten Kornfraktionen einstellt. Während des Transportes des Schüttguts 14 auf dem Wanderrost 12 durchströmen die aus dem Drehrohrofen ausströmende Heißgase das Schüttgut 14, wobei sie entsprechend dem erfindungsgemäßen Verfahren an den durch die Grenzflächen zwischen den Kornfraktionen gebildeten Leitflächen derart umgeleitet werden, dass sich eine längere Wechselwirkungszeit und damit ein verbesserter Wärmeaustausch zwischen den Gasen G und dem Schüttgut 14 einstellt. An der in Förderrichtung hinteren Umlenkrolle 13a des Wanderrostes 13 fällt das erhitzte Schüttgut 14 entlang einer Schräge 11a in die Eintrittsöffnung des Drehrohrofens 12, wobei sich die beiden Kornfraktionen innig vermengen.

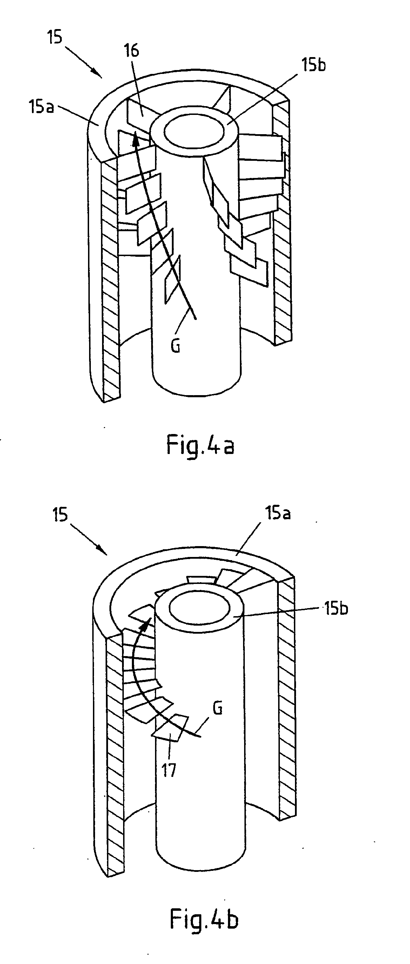

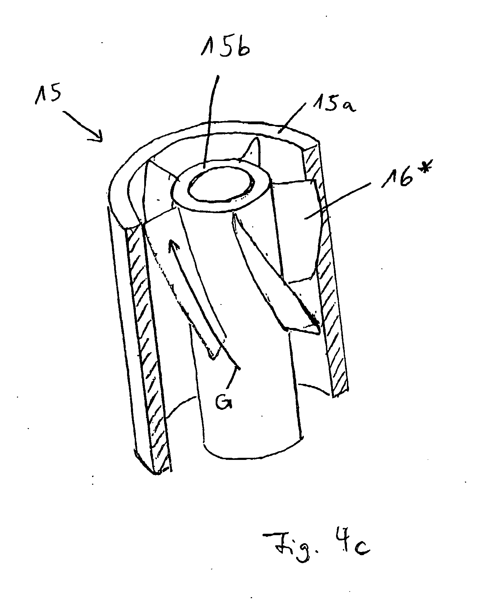

Das in den Fig. 4 a bis c dargestellte Längssegment eines Ringschachtofens 15 umfasst eine zylindrische äußere Mauerung 15a sowie eine ebenfalls zylindrische innere Mauerung 15b. Die in den Fig. 4a bis c dargestellten Leitflächen 16, 17, 16* werden durch eine spezielle Kornfraktion im durch den Ringschachtofen 15 transportierten Schüttgut gebildet und sind somit dessen Bestandteil. Diese spezielle Kornfraktion kann aus demselben Material wie das restliche Schüttgut bestehen. In einer gesonderten Anwendung kann jedoch auch eine aus einer Keramikschüttung bestehende Kornfraktion verwendet werden, welche nach Verlassen des Ofens zurückgewonnen und anschließend erneut zur Ausbildung von Leitflächen in den Ofen eingeleitet wird.

Gemäß Fig. 4a sind die Leitflächen 16 in einzelnen Axialebenen radial nach Art eines Propellers angeordnet,
wobei die Leitflächen 16 jeweils benachbarter Ebenen zueinander versetzt angeordnet sind. Durch diese Winkelversetzungen wird dem das Schüttgut (nicht dargestellt) im Schacht des Schacht- bzw. Ringschachtofens 15 in aufsteigender Richtung durchströmenden Gasstrom G eine Drallbewegung aufgezwungen, mit welcher die Wechselwirkungszeit zwischen dem Schüttgut und dem Gasstrom verlängert wird. Weiterhin sind die Leitflächen 16 zur Ofenlängsachse leicht geneigt angeordnet, um eine wirksame Ablenkung des Gasstroms G aus der Vertikalen zur Erzeugung einer Drallbewegung zu gewährleisten. Dieser Neigungswinkel ist aus Gründen einer leichteren Darstellbarkeit in der Fig. 4a nicht erkennbar.

Durch eine Verlängerung der Dauer der Gaspassage wird wiederum ein verbesserter Wärmeaustausch zwischen dem Gasstrom G und dem Schüttgut erzielt, wobei damit zusammenhängend als weiterer Vorteil das Ausbrandverhalten des jeweiligen Brennstoffes verbessert sowie die Abgastemperatur reduziert wird. Infolge der verbesserten Prozesseffizienz kann die Bauhöhe des Ringschachtofens 15 und anderer Schachtofentypen, wie auch von Schüttgutvorwärmern, in denen das erfindungsgemäße Prinzip verwirklicht ist, reduziert werden.

In dem Ringschachtofen gemäß Fig. 4b sind die Leitflächen radial in einer Spirale nach Art einer Wendeltreppe angeordnet. In diesem Fall sind die Leitflächen im wesentlichen horizontal ausgerichtet. Hierdurch kann besonders ausgeprägte Drallbewegung des Gasstromes G und damit eine besonders lange Wechselwirkungszeit zwischen dem Schüttgut und dem Gasstrom G erreicht werden.

Nach einer alternativen Ausgestaltung der Erfindung, sind die Leitflächen ortsfest mit der äußeren und der inneren Mauerung des Ofens verbunden. Dabei wird ebenfalls ein Anordnung der Leitflächen gemäß den Ausführungsbeispielen der Fig. 4a und 4b angestrebt. In diesem Falle sind die Leitflächen vorzugsweise plattenförmig ausgebildet und bestehen jeweils aus einem mit einem Feuerfestmaterial ummantelten Metallhohlkörper.

Wie in Fig. 4c gezeigt, können die entlang der Gasströmung G angeordneten Leitflächen 16 des Ringschachtofens 15 der Fig. 4a jeweils durch eine dreidimensionale Fläche 16* ersetzt sein.

In Fig. 5 ist schließlich die Gasströmung durch ein zwei Kornfraktionen umfassendes Schüttgut auf einem Rost gemäß dem Stand der Technik dargestellt. Deutlich zu erkennen ist, dass der Gasstrom nahezu senkrecht zur Oberfläche des Schüttgutes in dasselbe eintritt und praktisch auf kürzestem Wege durch die Schüttgutschicht strömt. Dabei macht es keinen Unterschied, ob die Kornfraktionen gleichmäßig miteinander vermengt sind (Fig. 5a) oder schichtweise auf den Rost aufgegeben wurden (Fig. 5b).

Das erfindungsgemäße Verfahren ist nicht auf die genannten Anlagen beschränkt, sondern kann in einer Reihe weiterer Anlagen beispielsweise in der Kalk-, Zement- und Stahlindustrie zum Einsatz kommt. Ein mögliches Einsatzgebiet liegt beispielsweise in der Hochofentechnik. Hierbei kann im Hochofen z.B. über eine speziell ausgebildete Drehschurre ein entsprechendes Schichtsystem mit Grenzflächen aufgebaut werden. Die unterschiedlichen Kornfraktionen werden dabei durch Koks einerseits und "Möller" (Gemisch aus Erzen und Zuschlägen) andererseits gebildet. Weitere Anwendungsmöglichkeiten liegen in der Erzeugung von Pellets aus Feinsterzen in der Stahlindustrie oder in der Erzeugung von Sinter auf einem Sinterband beispielsweise aus Feinerzen, Koksgrus und weiteren Zuschlägen. Hierbei kann beispielsweise das Trocknen, Brennen und Kühlen nach dem erfindungsgemäßen Prinzip in hintereinander liegenden Zonen auf einem Wanderrost erfolgen.

Generell kann das erfindungsgemäße Verfahren bei allen gasdurchströmten Schüttungen für Trocknungs-, Vorwärm-, Brenn- sowie Kühlapplikationen zum Einsatz kommen, und zwar unabhängig davon, ob die jeweilige Schüttung stationär ist oder sich in horizontaler, schräger oder vertikaler Richtung bewegt.

Die Erfindung ist nicht auf die beschriebenen Ausführungsbeispiele beschränkt, vielmehr ergeben sich für den Fachmann im Rahmen der Erfindung vielfältige Abwandlungs- und Modifikationsmöglichkeiten. Insbesondere wird der Schutzumfang der Erfindung durch die Ansprüche festgelegt.

## Patentansprüche

1. Verfahren zur Verlängerung der Verweilzeit einer Gasströmung (G) in einem Schüttgut (2, 5, 14), wobei das Schüttgut (2, 5, 14) durch eine Anlage transportiert wird, wobei die Gasströmung (C) im Schüttgut (2, 5, 14) an dort vorgesehenen Leitflächen (16, 17) umgeleitet wird, wobei die Leitflächen mit dem Schüttgut (2, 5, 14) mitbewegt werden,
wobei das Schüttgut (2, 5, 14) unterschiedliche, zumindest teilweise räumlich voneinander getrennte Kornfraktionen (3, 4, 6, 7) umfasst und die Leitflächen durch die Grenzflächen (4a) zwischen den Kornfraktionen (3, 4, 6, 7) gebildet werden und eine Kornfraktion (3, 4, 6, 7) nach erfolgtem Wärmeaustausch mit der Gasströmung von dem Schüttgut (2, 5, 14) abgetrennt und wiederverwendet wird
oder wobei
die Leitflächen (16, 17) jeweils durch einen Körper, welcher nicht Bestandteil des Schüttgutes ist, gebildet werden und der Körper nach erfolgtem Wärmeaustausch mit der Gasströmung von dem Schüttgut (2, 5, 14) abgetrennt und wiederverwendet wird.

2. Verfahren nach Anspruch 1,
**dadurch gekennzeichnet, dass** die Anlage eine Anlage zum Erhitzen, Brennen oder Kühlen des Schüttgutes ist.

3. Verfahren nach Anspruch 1 oder 2,
**dadurch gekennzeichnet, dass**
die unterschiedlichen Kornfraktionen (3, 4, 6, 7) unterschiedliche Materialzusammensetzungen oder unterschiedliche Qualitätsstufen eines Materials aufweisen.

4. Verfahren nach einem der Ansprüche 1 bis 3,
**dadurch gekennzeichnet, dass**
das Abtrennen durch Absieben erfolgt.

5. Verfahren nach Anspruch 1 oder 2,
**dadurch gekennzeichnet, dass**
der eine Leitfläche (16, 17) bildende Körper plattenförmig ausgebildet ist.

6. Verfahren nach Anspruch 1, 2 oder 5,
**dadurch gekennzeichnet, dass**
der Körper zumindest teilweise aus Feuerfestmaterial besteht.

7. Verfahren nach einem der Ansprüche 1 bis 6,
**dadurch gekennzeichnet, dass**
das Schüttgut (2, 5, 14) auf einem Wanderrost (1, 13) transportiert wird.

8. Verfahren nach Anspruch 7,
**dadurch gekennzeichnet, dass**
das Schüttgut (14) durch einen Lepolrost-Vorwärmer (10) transportiert wird.

9. Verfahren nach einem der Ansprüche 1 bis 8,
**dadurch gekennzeichnet, dass**
die Leitflächen im Schüttgut (2, 5) parallel zueinander angeordnet sind.

10. Verfahren nach einem der Ansprüche 1 bis 6,
**dadurch gekennzeichnet, dass**
das Schüttgut durch einen Schachtvorwärmer oder durch einen Schachtofen transportiert wird.

11. Verfahren nach Anspruch 10,
**dadurch gekennzeichnet, dass**
die Leitflächen (16) in einzelnen Axialebenen radial nach Art eines Propellers angeordnet sind, wobei die Leitflächen (16) jeweils benachbarter Ebenen zueinander versetzt angeordnet sind.

12. Verfahren nach Anspruch 10,
**dadurch gekennzeichnet, dass**
die Leitflächen (17) radial in einer Spirale angeordnet sind.

## Claims

1. Method for lengthening the dwell time of a gas flow (G) in a bulk material (2, 5, 14), wherein the bulk material (2, 5, 14) is conveyed through an installation, wherein the gas flow (G) is diverted in the bulk material (2, 5, 14) at guiding surfaces (16, 17) provided there, wherein the guiding surfaces are moved along with the bulk material (2, 5, 14),
wherein the bulk material (2, 5, 14) comprises different grain fractions (3, 4, 6, 7), which are at least in part spatially separated from one another, and the guiding surfaces are formed by the boundary surfaces (4a) between the grain fractions (3, 4, 6, 7) and one grain fraction (3, 4, 6, 7) is separated from the bulk material (2, 5, 14) after exchange of heat with the gas flow has taken place and is reused,
or wherein the guiding surfaces (16, 17) are in each case formed by a body which is not an integral part of the bulk material and the body is separated from the bulk material (2, 5, 14) after exchange of heat with the gas flow has taken place and is reused.

2. Method according to Claim 1, **characterised in that** the installation is an installation for heating, burning or cooling the bulk material.

3. Method according to Claim 1 or 2, **characterised in that** the different grain fractions (3, 4, 6, 7) have different material compositions or different quality grades of material.

4. Method according to any one of Claims 1 to 3, **characterised in that** the separation is carried out by screening.

5. Method according to Claim 1 or 2, **characterised in that** the body forming a guiding surface (16, 17) is plate-shaped in design.

6. Method according to Claim 1, 2 or 5, **characterised in that** the body at least partly consists of fireproof material.

7. Method according to any one of Claims 1 to 6, **characterised in that** the bulk material (2, 5, 14) is conveyed on a travelling grate (1, 13).

8. Method according to Claim 7, **characterised in that** the bulk material (14) is conveyed through a Lepol grate pre-heater (10).

9. Method according to any one of Claims 1 to 8, **characterised in that** the guiding surfaces are arranged parallel to one another in the bulk material (2, 5).

10. Method according to any one of Claims 1 to 6, **characterised in that** the bulk material is conveyed through a shaft pre-heater or through a shaft kiln.

11. Method according to Claim 10, **characterised in that** the guiding surfaces (16) in separate axial planes are arranged radially like a propeller, wherein the guiding surfaces (16) of respectively adjacent planes are offset in relation to one another.

12. Method according to Claim 10, **characterised in that** the guiding surfaces (17) are arranged radially in a spiral.

## Revendications

1. Procédé pour prolonger le temps de séjour d'un flux gazeux (G) dans une matière en vrac (2, 5, 14), la matière en vrac (2, 5, 14) étant transportée par une installation, le flux gazeux (G) étant dévié dans la matière en vrac (2, 5, 14), sur des surfaces de guidage (16, 17) prévues dans ce but, les surfaces de guidage étant mues avec la matière en vrac (2, 5, 14),
la matière en vrac (2, 5, 14) comprenant des fractions de granulométrie différente (3, 4, 6, 7), séparées au moins partiellement les unes des autres dans l'espace, et les surfaces de guidage étant formées par les surfaces de délimitation (4a) entre les fractions de granulométrie différente (3, 4, 6, 7), et une fraction (3, 4, 6, 7) étant séparée de la matière en vrac (2, 5, 14) et réutilisée après que l'échange thermique avec le flux gazeux ait eu lieu,
ou
les surfaces de guidage (16, 17) étant formées chacune par un corps, qui n'est pas un constituant de la matière en vrac, et ledit corps étant séparé de la matière en vrac (2, 5, 14) et réutilisée après que l'échange thermique avec le flux gazeux ait eu lieu.

2. Procédé selon la revendication 1, **caractérisé en ce que** l'installation est une installation de chauffage, de calcination ou de refroidissement de la matière en vrac.

3. Procédé selon revendication 1 ou 2, **caractérisé en ce que** les fractions de granulométrie différente (3, 4, 6, 7) présentent des compositions différentes ou des niveaux de qualité différents d'une matière.

4. Procédé selon l'une des revendications 1 à 3,
**caractérisé en ce que** la séparation est effectuée par criblage.

5. Procédé selon revendication 1 ou 2, **caractérisé en ce que** le corps, qui forme une surface de guidage (16, 17), présente la forme d'une plaque.

6. Procédé selon l'une des revendications 1, 2 ou 5, **caractérisé en ce que** le corps consiste, au moins partiellement, en matériau réfractaire,

7. Procédé selon l'une des revendications 1 à 6,
**caractérisé en ce que** la matière en vrac (2, 5, 14) est transportée sur une grille mobile (1, 13).

8. Procédé selon la revendication 7, **caractérisé en ce que** la matière en vrac (14) est transportée par un préchauffeur à grille lepol (10).

9. Procédé selon l'une des revendications 1 à 8,
**caractérisé en ce que** les surfaces de guidage sont disposées, dans la matière en vrac (2, 5), parallèlement les unes par rapport aux autres.

10. Procédé selon l'une des revendications 1 à 6,
**caractérisé en ce que** la matière en vrac est transportée par un préchauffeur à cuve ou par un four droit.

11. Procédé selon la revendication 10, **caractérisé en ce que** les surfaces de guidage (16) sont disposées, radialement, sur des plans axiaux individuels, à la manière d'une hélice, les surfaces de guidage (16) étant décalées, les unes par rapport aux autres, sur des plans respectifs, voisins.

12. Procédé selon la revendication 10, **caractérisé en ce que** les surfaces de guidage (17) sont disposées radialement en une spirale.
